# EUROPEAN PATENT SPECIFICATION

(11) **EP 3 126 751 B1**
(45) Date of publication and mention of the grant of the patent: **01.07.2020**
(21) Application number: 15708339.5
(22) Date of filing: 16.02.2015
(51) Int. Cl.: F24F 7/013, F24C 15/20, F24F 11/00, F24F 11/30, F24F 11/77, F24F 110/10, F24F 110/20, F24F 110/40, F24F 110/66

(54) **EXHAUST VENTILATION DEVICE AND METHOD**
ABLUFTVORRICHTUNG UND VERFAHREN
DISPOSITIF ET PROCÉDÉ DE VENTILATION D'EXTRACTION

(30) Priority: 02.04.2014 IT MI20140579
(43) Date of publication of application: 08.02.2017
(73) Proprietor: Elica S.p.A., 60044 Fabriano (Ancona) (IT)
(72) Inventor: MENICONI, Luca, I-06028 Sigillo PG (IT); CRISA', Fabrizio, I-60044 Fabriano AN (IT)
(74) Representative: Perani & Partners S.p.A.
(86) International application number: PCT/IB2015/051125
(87) International publication number: WO 2015/150928

(56) References cited:
- EP-A1- 2 642 213
- WO-A1-2004/111547
- DE-U1-202012 102 236
- GB-A- 2 298 057
- US-A1- 2011 151 766

## Description

### Field of the Invention

The present invention relates to an exhaust ventilation device, apparatus and method for controlling environmental parameters of a room as defined in the preambles of claims 1, 9 and 10 respectively.

Particularly, the present invention relates to an exhaust ventilation device and a corresponding method of operation, as well as an apparatus comprising a plurality of exhaust ventilation devices, which dynamically changes the operating threshold of the device.

### Background art

Exhaust ventilation devices for controlling environmental parameters of a room are known in the art. These exhaust ventilation devices are of the type that can be mounted to a wall of a room and provide fluid communication between the interior of the room and the outside environment of the room by capturing an airflow in the room and ejecting it out of the room.

For this purpose, these exhaust ventilation devices comprise a container structure in which an exhaust ventilation member, i.e. the exhaust ventilation element proper, is located.

This exhaust ventilation member consists of an electrically powered motor fan unit having impellers, for instance of helico-centrifugal type.

These exhaust ventilation devices are usually controlled by the user for extracting air from the room and exhausting it out of it until the user stops their operation.

While this operation is effective, it is not energy-efficient in certain applications.

In order to obviate this problem, the manufacturers of exhaust ventilation devices have integrated a sensor in the frame of the exhaust ventilation device, for detecting an environmental parameter such as temperature or humidity and have set a predetermined threshold value for actuation of the exhaust ventilation device. Particularly, each time that the threshold of the temperature sensor or the humidity sensor is exceeded, the exhaust ventilation device is actuated to extract air and exhaust it and stops its operation as soon as the value detected by the sensor falls below the threshold value.

While these exhaust ventilation devices are more efficient than user-controlled ones, they still suffer from certain drawbacks.

Particularly, since there is only one operating threshold, which is set at the factory or by the user during installation, this causes energy wastes or poor environmental comfort.

Thus, one may consider an exhaust ventilation device with an operating threshold set, for instance, at 21°C, with temperature being lower outside the room in which such device is placed. If the temperature sensor detects a temperature increase above 21°C in the room, e.g. due to the heat generated by the heating system, then the exhaust ventilation device would exhaust hot air into the environment, which will involve apparent energy costs (gas/gasoil/power consumption), money costs (fuel cost) and environmental costs (pollution caused by combustion or power generation) and a consequent loss of environmental comfort for the user.

Document DE 202012102236U relates to a system having a channel extending between a building-outer-side opening and a space-inner-side opening, and an air-conveying device provided in the channel. A distribution device enables distribution of portion of airflow flowing through a return guide and the channel arranged in a direction of flow, where the distribution device comprises a flap the position of which is variable by a control or regulating device.

### Object of the Invention

In view of the above discussed prior art, the object of the present invention is to obviate the above described problems associated with prior art exhaust ventilation devices to provide a user with the best climate comfort by creating an ideal microclimate and ensuring maximized energy savings.

This object is fulfilled by an exhaust ventilation device for controlling environmental parameters of a room as defined in the features of claim 1.

This object is also fulfilled by an exhaust ventilation apparatus for controlling environmental parameters of a building as defined by claim 10.

This object is also fulfilled by an exhaust ventilation method for controlling environmental parameters of a room as defined in claim 11.

The present invention provides an exhaust ventilation device and method for controlling environmental parameters of a room to obtain superior climate comfort and higher energy and money savings as compared with prior art exhaust ventilation devices.

Also, the present invention provides climate comfort not only in a single room but also in an entire building, to achieve energy and money savings that might not be obtained by individual prior art devices.

### Brief Description of the Drawings

The characteristics and advantages of the invention will appear from the following detailed description of one preferred embodiment, which is illustrated without limitation in the annexed drawings, in which:

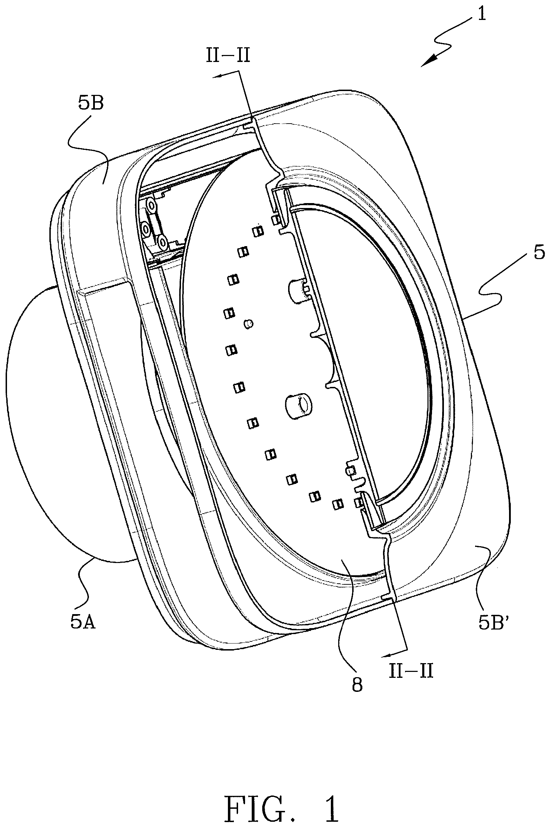

- Figure 1 shows a partially sectional perspective view of an exhaust ventilation device of the present invention;
- Figure 2 shows a sectional view of the exhaust ventilation device of Figure 1 as taken along line II-II, with such device mounted to a wall of a room, according to the present invention;

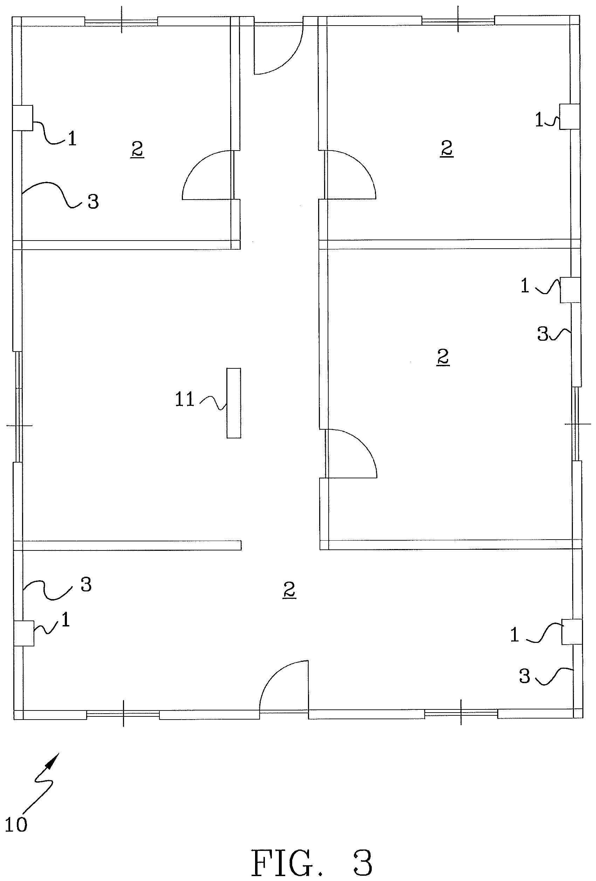

- Figure 3 shows a map of a building in which ventilation devices of the present invention are arranged.

### DETALIED DESCRIPTION

As used herein, the term microclimate is intended to designate those environmental parameters that affect heat exchange between a user and the environment in confined spaces of a room and provide the so-called thermal comfort, i.e. full satisfaction of the user with respect to the environment.

As used herein, the term environmental parameters is intended to designate individual or combined parameters of air temperature, forced-ventilation wet temperature, natural-ventilation wet temperature, relative humidity and air or ventilation speed, presence of polluting VOCs.

As used herein, the term room is intended to designate a room or space of an apartment for residential use, or a public space, such as a public concern (a bar, a restaurant, etc.) or for industrial use.

As used herein, the term building is intended to designate a structure having more rooms as defined above.

As used herein, the term portable electronic device is intended to designate an electronic apparatus that can be held and carried by a hand of a user, such as a smart phone, a tablet, a notepad, a notebook, a radio control or similar electronic apparatus.

Referring to the accompanying figures, numeral 1 designates an exhaust ventilation device for controlling environmental parameters of a room 2.

The exhaust ventilation device 1 is of the type that can be mounted to a wall 3 of the room, such as a perimeter wall or the ceiling of the room, for providing fluid communication between the interior INT of the room 2 and the outside environment EXT of the room 2 by capturing an airflow in said room and ejecting it out of it.

This exhaust ventilation device 1 comprises an exhaust ventilation member 4 and a container structure 5 (i.e. the frame of the device 1) in which the exhaust ventilation member is located.

The exhaust ventilation member 4 consists of an electrically powered motor fan unit, possibly of reversible type, having an impeller, for instance of helico-centrifugal type.

For example, the exhaust ventilation member 4 may be enclosed in a cylinder 5A formed of one piece with the container stricture 5, and adapted to be entirely held within the thickness of the wall 3 for fluid communication between the interior INT of the room 2 and the outside environment EXT of this room 2.

The container structure 5 of the exhaust ventilation device 1 is made, for instance, of a plastic material of ABS type.

The exhaust ventilation device 1 is characterized by comprising a plurality of sensors 6, each monitoring a physical quantity of air in the room 2.

This plurality of sensors 6 are preferably arranged within the container structure 5 of the exhaust ventilation device 1.

The sensors 5 may be designed to be partially installed remote from the exhaust ventilation device 1. For example, part of these sensors may be installed in a frame of a kitchen hood.

Such installation type is described in patent document MI2013A000689 by the applicant hereof and is entirely incorporated herein.

It shall be noted that the plurality of sensors 6 are selected from the group comprising one or more temperature sensors, a humidity sensor, a pressure sensor, a carbon dioxide sensor, an infrared sensor, a VOC (Volatile Organic Compounds) sensor, that can detect various carbon compounds (including hydrocarbons).

Preferably, at least two sensors 6 are implemented in the exhaust ventilation device 1 of the present invention, such as the temperature sensor and the humidity sensor, but in other embodiments, three, four or more sensors 6 may be implemented.

The exhaust ventilation device 1 comprises at least one microprocessor 7 disposed within the container structure 5 of the exhaust ventilation device 1.

It shall be noted that the plurality of sensors 6 are operably connected with the microprocessor 7, according to methods known in the art, which will not be disclosed herein.

Particularly, in addition to performing normal command, control and communication tasks for the exhaust ventilation device 1, the microprocessor 7 is also designed to define an operating threshold of the exhaust ventilation member 4 according to a program code which is configured to combined the values detected by such plurality of sensors 6.

Advantageously, the value of the operating or actuation threshold of the exhaust ventilation member 4 is dynamically adjusted by the microprocessor 7 as the combination of values detected by said plurality of sensors 6 changes.

Particularly, the microprocessor 7 receives signals from two or more sensors 6 implemented in the exhaust ventilation device 1, which are appropriately combined by the program code, to identify the appropriate threshold value.

In other words, the operating threshold of the exhaust ventilation device 1 has no constant value and changes according to the combination of the changing readings of the values read by the sensors 6.

It shall be noted that according to the combined signals received from the plurality of sensors 6, the program code defines the value of the operating threshold, which represents the minimum threshold value at which the exhaust ventilation member 4 is actuated.

This minimum threshold value is preferably defined when the exhaust ventilation member 4 is off This allows the actuation of the ventilation member 4 to be adapted to the particular position of the room 2. This is due to the assumption that, once the exhaust ventilation device 1 has been installed in a room 2, "slow" changes occur in the data detected by the sensors 6, which changes may be indicative of the particular type of installation.

The term "slow" is intended to relate to physical parameters whose values exhibit moderate changes with time.

For example, the particular type of installation may consist in a geographic location, with a distinction between warm or cold climates, or changing seasons and/or the presence of other air conditioning/control devices.

It shall be noted that these "slow" changes in the data detected by the sensors 6, which are appropriately combined by the program code implemented in the microprocessor 7 change the minimum threshold signal that has been set.

For example, the threshold value that has been set by the combined values read by the various implemented sensors 6 might require the exhaust ventilation member 4 to operate at a minimum exhaust ventilation speed.

If a later reading of the data detected by the sensors 6, after a predetermined interval of time, shows that the values read by the sensors have further deviated from the threshold, then a new operating threshold value may be set, such that an appropriate exhaust ventilation speed of the exhaust ventilation member 4 may be set.

When the exhaust ventilation device 1 is actuated, for example, in response to a "fast" change of the data detected by the plurality of sensors 6 (e.g. food cooking fumes, cigarette smoke and/or abrupt temperature changes, etc.) with the operating threshold being suddenly exceeded, then such threshold value is "frozen" to the last set threshold value.

The term "fast" is intended to relate to physical parameters whose values exhibit considerable changes with time.

This condition lasts until the combination of values detected by the sensors 6 becomes equal to or lower than the last set minimum threshold value, i.e. when air extraction is no longer needed in the room 2.

Then, a new data detection may be started by the sensors 6 to determine a new minimum threshold value.

For this purpose, the microprocessor 7 comprises:
- sampling means for sampling the signals detected by the plurality of sensors 6, each representing its own physical quantity, to generate sampled data and
- processing means for processing such sampled data by the above mentioned program code.

Particularly, the sampling means in the microprocessor 7 are configured to sample the signals detected during a predetermined sampling time interval, such that the microprocessor 7 can change the value of the operating threshold of the exhaust ventilation member 4 once that such time interval has elapsed.

For this purpose, the microprocessor 7 comprises a memory which stores reference data for each detected physical quantity and such processing means are configured to process the sampled data according to such stored data.

It shall be noted that the program code is also stored in the memory of the microprocessor 7.

In other words, in one aspect the present invention includes the step of sampling the signals generated by each sensor of the plurality of sensors 6 implemented in the exhaust ventilation device 1 for a predetermined sufficient sampling time interval and, according to the sampling results, defining the value of the operating threshold of the exhaust ventilation member 4.

Particularly this may be achieved using the program code, which is configured to combine the sampled values such that the value of the operating threshold may be adjusted as the combination of values detected by the plurality of sensors 6 changes.

It shall be noted that the time interval ranges, for example, from 5 minutes to 12 hours.

According to one embodiment of the present invention, at least one printed-circuit board 8 is provided, having the plurality of sensors 6 and the microprocessor operably arranged thereon.

This printed-circuit board 8 is housed within a container structure 6 and particularly such container structure 5 is designed to comprise a portion 5B that, during use, faces the interior INT of the room 2, and forms a clearance 13 between the portion 5B and the wall 3.

Particularly, this portion 5B extends in a direction transverse, preferably parallel to the direction of extension of the wall 3 of the room 2. This portion 5B defines a first surface 5B', which is opposed to a second surface 5B", with the first surface 5B' being exposed to the view of a user and the second surface 5B" being hidden from the view of such user.

The printed-circuit board 8 is advantageously associated with the second surface 5B", such that the airflow may impinge thereupon during operation of the exhaust ventilation member 4, and the physical quantities being analyzed may be more accurately detected.

In one embodiment, the exhaust ventilation device 1 is designed to comprise a temperature sensor 9 which is located outside EXT the room 2.

This sensor 9 is in signal communication with the microprocessor 7, in wired or wireless mode.

Advantageously, the microprocessor 7 defines the operating conditions of the exhaust ventilation member 4 also according to the values detected by the temperature sensor 9 to thereby determine a threshold value that is even more accurate for climate comfort.

In one embodiment, the exhaust ventilation device 1 comprises one or more wireless transmit/receive modules 12, which may be based on the IEEE 802.11 standard, i.e. Wi-Fi transmit/receive modules or Zigbee modules.

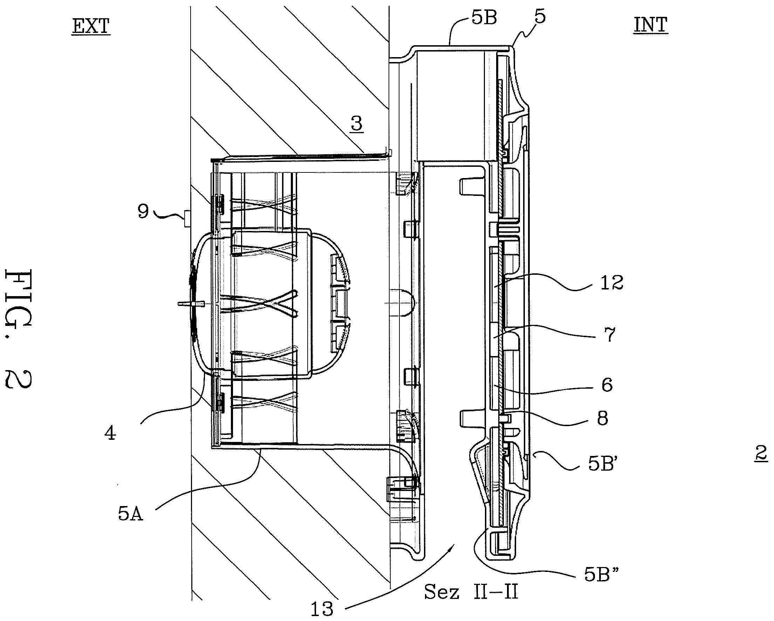

Referring now to Figure 2, there is shown a building 10 composed of a plurality of rooms 2 which may have the exhaust ventilation device 1 mounted to a wall or ceiling 3 thereof.

These exhaust ventilation devices 1 are in signal communication with one another, i.e. networked, through the wireless transmit/receive module 12.

In one aspect of the present invention, each of the exhaust ventilation devices 1 may be controlled by a portable electronic device 11 comprising:
- a wireless transmit/receive module compatible with the wireless transmit/receive module 12 and
- a memory that stores a program code.

The program code of the portable electronic device 11 is operably configured to establish signal communication between the portable electronic device 11 and each of the exhaust ventilation devices 1.

Particularly, this program code is configured to:
- acquire the signals detected by the plurality of sensors 6 from each of the exhaust ventilation devices 1 and
- defining, for one or more of said microprocessors 7 of the exhaust ventilation devices 1, an operating threshold value of the ventilation member 4 that may be dynamically adjusted in response to the changes in the values of the signals detected after an interval of time.

Preferably, the program code stored in the memory of the portable electronic device 11 is written in C++/Java or Objective-C.

Those skilled in the art will obviously appreciate that a number of changes and variants may be made to the exhaust ventilation device and method for controlling environmental parameters of a room according to the invention as described hereinbefore to meet specific needs, without departure from the scope of the invention, as defined in the following claims.

## Claims

1. An exhaust ventilation device (1) for controlling environmental parameters in a room (2), of the type that can be mounted to a wall (3) for providing fluid communication between the interior of said room (2) and the outside environment of said room (2) by capturing an airflow in said room and ejecting it out of said room, said exhaust ventilation device (1) comprising:
- an exhaust ventilation member (4) and a container structure (5) in which said exhaust ventilation member (4) is adapted to be placed;
- a plurality of sensors (6), each monitoring a physical quantity of air in said room (2);
- at least one microprocessor (7) placed within said container structure (5) and adapted to define an operating threshold of said exhaust ventilation member (4) according to a program code that is configured to combine the values detected by said plurality of sensors (6), the value of said operating threshold being dynamically adjusted by said at least one microprocessor (7) as said combination of values detected by said plurality of sensors (6) changes;
- at least one printed-circuit board (8) having said plurality of sensors (6) and said microprocessor (7) operably arranged thereon;
**characterized in that** said container structure (5) comprises a portion that, during use, projects in the interior of the room (2), while forming a clearance (13) between the portion (5B) and the wall (3), said portion (5B) defining a first surface (5B') opposed to a second surface (5B"), said first surface (5B') and said second surface (5B") being transverse to the direction of extension of the wall (3), said first surface (5B') being exposed to the view of a user and said second surface (5B") being hidden from the view of such user, said printed-circuit board (8) being associated with said second surface (5B") such that the airflow impinges thereupon during operation of said exhaust ventilation member (4).

2. An exhaust ventilation device as claimed in claim 1, wherein said at least one microprocessor (7) comprises sampling means for sampling said values detected by said plurality of sensors (6) to generate sampled data, and processing means for processing said sampled data using said program code, said sampling means being configured to sample said values detected by said plurality of sensors (6) within a predetermined interval of time, such that said microprocessor (7) may change the value of said operating threshold of said exhaust ventilation member when said interval of time has expired.

3. An exhaust ventilation device as claimed in claim 1 or 2, wherein said at least one microprocessor (7) comprises a memory which stores reference data for each detected physical quantity and said processing means are configured to process said sampled data according to said stored data.

4. An exhaust ventilation device as claimed in any of the preceding claims, wherein said exhaust ventilation member (4), during use, is enclosed in a cylinder (5A) formed of one piece with the container stricture (5) and adapted to be entirely held within the thickness of the wall (3).

5. An exhaust ventilation device as claimed in any of the preceding claims, comprising a wireless transmit/receive module (12) based on the specifications of IEEE 802.11 standard or Zigbee.

6. An exhaust ventilation device as claimed in any of the preceding claims, wherein said exhaust ventilation member (4) is adapted to be electrically powered and has a reversible operation.

7. An exhaust ventilation device as claimed in any of the preceding claims, wherein said exhaust ventilation device (1) comprises at least two sensors and said plurality of sensors (6) is selected from the group comprising a temperature sensor, a humidity sensor, a pressure sensor, an air quality sensor (VOC), an infrared sensor.

8. An exhaust ventilation device as claimed in any of the preceding claims, comprising a temperature sensor (9) located outside said room (2), said microprocessor (7) defining operating conditions of said exhaust ventilation member (4) also according to the values detected by said temperature sensor (9).

9. An exhaust ventilation apparatus for controlling environmental parameters of a building (10), which is configured to control the operation of one or more exhaust ventilation devices (1), each being disposed in a room (2) of said building (10), said exhaust ventilation device (1) being of the type that can be mounted to a wall (3) for providing fluid communication between the interior of said room (2) and the outside environment of said room (2) by capturing an airflow in said room and ejecting it out of said room, said ventilation device being **characterized in that it** comprises:
- a plurality of exhaust ventilation devices (1) as claimed in any of the preceding claims 1 to 8, said plurality of exhaust ventilation devices (1) being in signal communication with each other via said wireless signal transmit/receive module (12);
- a portable electronic device (11) having a wireless signal transmit/receive module compatible with said wireless signal transmit/receive module (12) and a memory that stores a program code that is operably configured to establish signal communication with each of said plurality of exhaust ventilation devices (1), said program code being configured to:
- acquire the values detected by said plurality of sensors (6) from each of said plurality of exhaust ventilation devices, and
- defining, for one or more of said microprocessors (4) of said exhaust ventilation devices (1), an operating threshold value of the respective ventilation members (4) according to program codes that are configured to combine the values detected by said plurality of sensors (6), such operating threshold being dynamically adjusted as said combination of values detected by said plurality of sensors (6) changes.

10. A method of controlling environmental parameters of a room, comprising the steps of:
- providing an exhaust ventilation device (1) as claimed in any of claims 1 to 8;
said method being **characterized in that it comprises** the steps of:
- detecting the signals generated by each sensor of said plurality of sensors (6) for a predetermined interval of time;
- defining an operating threshold of said exhaust ventilation member (4) according to a program code which is configured to combine the detected values;
- dynamically adjusting the value of said operating threshold as said combination of said detected values changes.

11. A method of controlling environmental parameters of a room as claimed in claim 10, wherein said step of detecting comprises a step of sampling said signals generated by each sensor of said plurality of sensors (6) for a predetermined interval of sampling time, ranging from 5 minutes to 12 hours.

## Patentansprüche

1. Abluftventilationsvorrichtung (1) zum Steuern von Umgebungsparametern in einem Raum (2), des Typs, der an einer Wandung (3) montiert werden kann, um eine Fluidverbindung zwischen dem Inneren des Raums (2) und der Außenumgebung des Raums (2) herzustellen, indem ein Luftstrom in dem Raum eingefangen und aus dem Raum ausgestoßen wird, wobei die Abluftventilationsvorrichtung (1) Folgendes umfasst:
- ein Abluftventilationselement (4) und eine Behälterstruktur (5), in der das Abluftventilationselement (4) geeignet ist platziert zu werden;
- eine Vielzahl von Sensoren (6), die jeweils eine physikalische Luftmenge in dem Raum (2) überwachen;
- mindestens einen Mikroprozessor (7), der im Innern der Behälterstruktur (5) platziert ist und der geeignet ist
eine Betriebsschwelle des Abluftventilationselements (4) gemäß einem Programmcode zu definieren, der konfiguriert ist, die von der Vielzahl von Sensoren (6) erfassten Werte zu kombinieren, wobei der Wert der Betriebsschwelle von dem mindestens einen Mikroprozessor (7) dynamisch eingestellt wird, wenn sich die von der Vielzahl von Sensoren (6) erfasste Wertekombination ändert;
- mindestens eine Leiterplatte (8) aufweisend die Vielzahl von Sensoren (6) und den darauf betriebsbereit angeordneten Mikroprozessor (7);
**dadurch gekennzeichnet, dass** die Behälterstruktur (5) einen Abschnitt umfasst, der während des Gebrauchs in das Innere des Raumes (2) unter Bildung eines Abstandes (13) zwischen dem Abschnitt (5B) und der Wandung (3) hineinragt, wobei der Abschnitt (5B) eine erste Oberfläche (5B') definiert, die einer zweiten Oberfläche (5B") gegenüberliegt, wobei die erste Oberfläche (5B') und die zweite Oberfläche (5B") sich quer zur Ausdehnungsrichtung der Wandung (3) erstrecken; die erste Oberfläche (5B') dem Blick eines Benutzers ausgesetzt ist und die zweite Oberfläche (5B") dem Blick des Benutzers verborgen ist; die Leiterplatte (8) der zweiten Oberfläche (5B") zugeordnet ist, so dass der Luftstrom während des Betriebs des Abluftventilationselements (4) darauf auftreffen kann.

2. Abluftventilationsvorrichtung nach Anspruch 1, wobei der mindestens eine Mikroprozessor (7) Abtastmittel zum Abtasten der von der Vielzahl von Sensoren (6) erfassten Werte, um abgetastete Daten zu erzeugen, sowie Verarbeitungsmittel zum Verarbeiten der abgetasteten Daten unter Verwendung des Programmcodes umfasst, wobei die Abtastmittel dazu konfiguriert sind, die von der Vielzahl von Sensoren (6) erfassten Werte innerhalb eines vorbestimmten Zeitintervalls abzutasten, so dass der Mikroprozessor (7) den Wert der Betriebsschwelle des Abluftventilationselements ändern kann, wenn der Zeitintervall abgelaufen ist.

3. Abluftventilationsvorrichtung nach Anspruch 1 oder 2, wobei der mindestens eine Mikroprozessor (7) einen Speicher umfasst, der Referenzdaten für jede erfasste physikalische Größe speichert, und die Verarbeitungsmittel so konfiguriert sind, dass sie die abgetasteten Daten gemäß den gespeicherten Daten verarbeiten.

4. Abluftventilationsvorrichtung nach einem der vorgehenden Ansprüche, wobei das Abluftventilationselement (4) während des Gebrauchs in einem Zylinder (5A) eingeschlossen ist, der einstückig mit der Behälterstruktur (5) ausgebildet ist und geeignet ist vollständig innerhalb der Dicke der Wandung (3) gehalten zu werden.

5. Abluftventilationsvorrichtung nach einem der vorgehenden Ansprüche, umfassend ein drahtloses Sende-/Empfangsmodul (12) basierend auf den Spezifikationen des IEEE 802.11- oder Zigbee-Standards.

6. Abluftventilationsvorrichtung nach einem der vorgehenden Ansprüche, wobei das Abluftventilationselement (4) für die elektrische Versorgung und für einen reversiblen Betrieb ausgelegt ist.

7. Abluftventilationsvorrichtung nach einem der vorgehenden Ansprüche, wobei die Abluftventilationsvorrichtung (1) mindestens zwei Sensoren umfasst und die Vielzahl von Sensoren (6) aus der Gruppe ausgewählt sind, umfassend einen Temperatursensor, einen Feuchtigkeitssensor, einen Drucksensor, einen Luftqualitätssensor (VOC), einen Infrarotsensor.

8. Abluftventilationsvorrichtung nach einem der vorgehenden Ansprüche, umfassend einen Temperatursensor (9), der sich außerhalb des Raumes (2) befindet, wobei der Mikroprozessor (7) die Betriebsbedingungen des Abluftventilationselements (4) auch gemäß den durch den Temperatursensor (9) erfassten Werten definiert.

9. Abluftventilationseinrichtung zum Steuern der Umgebungsparameter eines Gebäudes (10), die zum Steuern des Betriebs einer oder mehrerer Abluftventilationsvorrichtungen (1) konfiguriert ist, welche jeweils in einem Raum (2) des Gebäudes (10) aufgestellt sind, wobei die Abluftventilationsvorrichtung (1) von dem Typ ist, der an einer Wand (3) montiert werden kann, um eine Fluidverbindung zwischen dem Inneren des Raums (2) und der Außenumgebung des Raums (2) herzustellen, indem ein Luftstrom in dem Raum aufgenommen und aus dem Raum ausgestoßen wird, wobei die Ventilationsvorrichtung **dadurch gekennzeichnet ist, dass sie** Folgendes umfasst:
- eine Vielzahl von Abluftventilationsvorrichtungen (1) nach einem der vorgehenden Ansprüche von 1 bis 8, wobei die Vielzahl von Abluftventilationsvorrichtungen (1) über das drahtlose Signal-Sende-/Empfangsmodul (12) miteinander in Signalkommunikation stehen;
- eine tragbare elektronische Vorrichtung (11) aufweisend einen drahtlosen Signal-Sende-/ Empfangsmodul, das mit dem drahtlosen Signal-Sende-/Empfangsmodul (12) kompatibel ist und einen Speicher, der einen Programmcode speichert, der funktionell konfiguriert ist, um eine Signalkommunikation mit jedem der Vielzahl von Abluftventilationsvorrichtungen (1) herzustellen, wobei der Programmcode dazu konfiguriert ist:
- die durch die Vielzahl von Sensoren (6) erfassten Werte von jeder der Vielzahl von Abluftventilationsvorrichtungen zu erfassen, und
- für einen oder mehrere der Mikroprozessoren (4) der Abluftventilationsvorrichtungen (1) einen Betriebsschwellenwert der jeweiligen Ventilationselemente (4) gemäß den Programmcodes zu definieren, die konfiguriert sind, um die von der Vielzahl von Sensoren (6) erfassten Werte zu kombinieren, wobei die Betriebsschwelle dynamisch eingestellt wird, wenn sich die Kombination der durch die Vielzahl von Sensoren (6) erfassten Werte ändert.

10. Verfahren zum Steuern von Umgebungsparametern eines Raums, umfassend folgende Schritte:
- Bereitstellen einer Abluftventilationsvorrichtung (1) nach irgendeinem der Ansprüche von 1 bis 8; wobei das Verfahren **dadurch gekennzeichnet ist, dass es** folgende Schritte umfasst:
- Erfassen der von jedem Sensor der Vielzahl von Sensoren (6) erzeugten Signale für ein vorbestimmtes Zeitintervall;
- Definieren einer Betriebsschwelle des Abluftventilationselements (4) gemäß einem Programmcode, der zur Kombination der erfassten Werte konfiguriert ist;
- Dynamische Einstellung des Betriebsschwellenwerts, wenn sich die Kombination der erfassten Werte ändert.

11. Verfahren zum Steuern von Umgebungsparametern eines Raums nach Anspruch 10, wobei der Erfassungsschritt einen Schritt des Abtastens der von jedem Sensor der Vielzahl von Sensoren (6) erzeugten Signale für ein vorbestimmtes Abtastzeitintervall im Bereich von 5 Minuten bis 12 Stunden umfasst.

## Revendications

1. Dispositif de ventilation d'extraction (1) pour réguler des paramètres environnementaux dans une pièce (2), du type qui peut être monté sur un mur (3) pour fournir une communication fluidique entre l'intérieur de ladite pièce (2) et l'environnement extérieur de ladite pièce (2) par la capture d'un flux d'air dans ladite pièce et son éjection hors de ladite pièce, ledit dispositif de ventilation d'extraction (1) comprenant :
- un élément de ventilation d'extraction (4) et une structure de contenant (5) dans laquelle ledit élément de ventilation d'extraction (4) est conçu pour être placé ;
- une pluralité de capteurs (6), chacun surveillant une grandeur physique de l'air dans ladite pièce (2) ;
- au moins un microprocesseur (7) placé à l'intérieur de ladite structure de contenant (5) et conçu pour définir un seuil de fonctionnement dudit élément de ventilation d'extraction (4) en fonction d'un code de programme qui est configuré pour combiner les valeurs détectées par ladite pluralité de capteurs (6), la valeur dudit seuil de fonctionnement étant ajustée de manière dynamique par ledit au moins un microprocesseur (7) lorsque ladite combinaison de valeurs détectées par ladite pluralité de capteurs (6) change ;
- au moins une carte de circuit imprimé (8) ayant ladite pluralité de capteurs (6) et ledit microprocesseur (7) agencés de manière fonctionnelle sur celle-ci ;
**caractérisé en ce que** ladite structure de contenant (5) comprend une partie qui, au cours de l'utilisation, fait saillie à l'intérieur de la pièce (2), tout en formant un jeu (13) entre la partie (5B) et le mur (3), ladite partie (5B) définissant une première surface (5B') opposée à une seconde surface (5B"), ladite première surface (5B') et ladite seconde surface (5B") étant transversales à la direction d'extension du mur (3), ladite première surface (5B') étant exposée à la vue d'un utilisateur et ladite seconde surface (5B") étant cachée de la vue de cet utilisateur, ladite carte de circuit imprimé (8) étant associée à ladite seconde surface (5B") de sorte que le flux d'air est incident sur celle-ci au cours du fonctionnement dudit élément de ventilation d'extraction (4).

2. Dispositif de ventilation d'extraction selon la revendication 1, dans lequel ledit au moins un microprocesseur (7) comprend des moyens d'échantillonnage pour échantillonner lesdites valeurs détectées par ladite pluralité de capteurs (6) pour générer des données échantillonnées, et des moyens de traitement pour traiter lesdites données échantillonnées à l'aide dudit code de programme, lesdits moyens d'échantillonnage étant configurés pour échantillonner lesdites valeurs détectées par ladite pluralité de capteurs (6) pendant un intervalle de temps prédéterminé, de sorte que ledit microprocesseur (7) peut changer la valeur dudit seuil de fonctionnement dudit élément de ventilation d'extraction lorsque ledit l'intervalle de temps a expiré.

3. Dispositif de ventilation d'extraction selon la revendication 1 ou 2, dans lequel ledit au moins un microprocesseur (7) comprend une mémoire qui stocke des données de référence pour chaque grandeur physique détectée et lesdits moyens de traitement sont configurés pour traiter lesdites données échantillonnées en fonction desdites données stockées.

4. Dispositif de ventilation d'extraction selon l'une quelconque des revendications précédentes, dans lequel ledit élément de ventilation d'extraction (4), au cours de l'utilisation, est enfermé dans un cylindre (5A) formé d'un seul tenant avec la structure de contenant (5) et conçu pour être entièrement maintenu à l'intérieur de l'épaisseur du mur (3).

5. Dispositif de ventilation d'extraction selon l'une quelconque des revendications précédentes, comprenant un module d'émission/réception sans fil (12) basé sur les spécifications de la norme IEEE 802.11 ou Zigbee.

6. Dispositif de ventilation d'extraction selon l'une quelconque des revendications précédentes, dans lequel ledit élément de ventilation d'extraction (4) est conçu pour être alimenté électriquement et possède un fonctionnement réversible.

7. Dispositif de ventilation d'extraction selon l'une quelconque des revendications précédentes, dans lequel ledit dispositif de ventilation d'extraction (1) comprend au moins deux capteurs et ladite pluralité de capteurs (6) est sélectionnée parmi le groupe comprenant un capteur de température, un capteur d'humidité, un capteur de pression, un capteur de qualité de l'air (de composés organiques volatils, COV), un capteur infrarouge.

8. Dispositif de ventilation d'extraction selon l'une quelconque des revendications précédentes, comprenant un capteur de température (9) situé à l'extérieur de ladite pièce (2), ledit microprocesseur (7) définissant des conditions de fonctionnement dudit élément de ventilation d'extraction (4) également en fonction des valeurs détectées par ledit capteur de température (9).

9. Appareil de ventilation d'extraction pour réguler des paramètres environnementaux d'un bâtiment (10), qui est configuré pour réguler le fonctionnement d'un ou de plusieurs dispositifs de ventilation d'extraction (1), chacun étant disposé dans une pièce (2) dudit bâtiment (10), ledit dispositif de ventilation d'extraction (1) étant du type qui peut être monté sur un mur (3) pour fournir une communication fluidique entre l'intérieur de ladite pièce (2) et l'environnement extérieur de ladite pièce (2) par la capture d'un flux d'air dans ladite pièce et son éjection hors de ladite pièce, ledit dispositif de ventilation étant **caractérisé en ce qu'il** comprend :
- une pluralité de dispositifs de ventilation d'extraction (1) selon l'une quelconque des revendications 1 à 8 précédentes, ladite pluralité de dispositifs de ventilation d'extraction (1) étant en communication de signal les uns avec les autres via ledit module d'émission/réception de signal sans fil (12) ;
- un dispositif électronique portable (11) ayant un module d'émission/réception de signal sans fil compatible avec ledit module d'émission/réception de signal sans fil (12) et une mémoire qui stocke un code de programme qui est configuré de manière fonctionnelle pour établir une communication de signal avec chacun de ladite pluralité de dispositifs de ventilation d'extraction (1), ledit code de programme étant configuré pour :
- acquérir les valeurs détectées par ladite pluralité de capteurs (6) à partir de chacun de ladite pluralité de dispositifs de ventilation d'extraction, et
- définir, pour l'un ou plusieurs desdits microprocesseurs (4) desdits dispositifs de ventilation d'extraction (1), une valeur de seuil de fonctionnement des éléments de ventilation respectifs (4) en fonction de codes de programme qui sont configurés pour combiner les valeurs détectées par ladite pluralité de capteurs (6), ce seuil de fonctionnement étant ajusté de manière dynamique lorsque ladite combinaison de valeurs détectées par ladite pluralité de capteurs (6) change.

10. Procédé de régulation de paramètres environnementaux d'une pièce, comprenant les étapes de :
- la fourniture d'un dispositif de ventilation d'extraction (1) selon l'une quelconque des revendications 1 à 8 ; ledit procédé étant **caractérisé en ce qu'il comprend** les étapes de :
- la détection des signaux générés par chaque capteur de ladite pluralité de capteurs (6) pendant un intervalle de temps prédéterminé ;
- la définition d'un seuil de fonctionnement dudit élément de ventilation d'extraction (4) en fonction d'un code de programme qui est configuré pour combiner les valeurs détectées ;
- l'ajustement de manière dynamique de la valeur dudit seuil de fonctionnement lorsque ladite combinaison desdites valeurs détectées change.

11. Procédé de régulation de paramètres environnementaux d'une pièce selon la revendication 10, dans lequel ladite étape de détection comprend une étape d'échantillonnage desdits signaux générés par chaque capteur de ladite pluralité de capteurs (6) pendant un intervalle prédéterminé de temps d'échantillonnage, allant de 5 minutes à 12 heures.
